(19) Europäisches Patentamt
European Patent Office
Office européen des brevets

(11) EP 1 914 285 A1

(12) EUROPEAN PATENT APPLICATION
published in accordance with Art. 153(4) EPC

(43) Date of publication:
**23.04.2008 Bulletin 2008/17**

(21) Application number: **06782568.7**

(22) Date of filing: **09.08.2006**

(51) Int Cl.:
***C09J 201/00*** *(2006.01)*
***C08L 63/00*** *(2006.01)*
***C09D 7/12*** *(2006.01)*
***C09D 175/04*** *(2006.01)*
***C09J 175/04*** *(2006.01)*
***B05D 5/00*** *(2006.01)*
***C08L 75/04*** *(2006.01)*
***C09D 163/00*** *(2006.01)*
***C09J 163/00*** *(2006.01)*

(86) International application number:
**PCT/JP2006/315752**

(87) International publication number:
**WO 2007/018239 (15.02.2007 Gazette 2007/07)**

(84) Designated Contracting States:
**DE FR GB**

(30) Priority: **09.08.2005 JP 2005230873**
**07.12.2005 JP 2005353571**

(71) Applicant: **The Yokohama Rubber Co., Ltd.**
**Minato-ku**
**Tokyo 105-8685 (JP)**

(72) Inventors:
- **CHINO, Keisuke**
  **Kanagawa 254-8601 (JP)**
- **MATSUMURA, Misaki**
  **Kanagawa 254-8601 (JP)**

(74) Representative: **HOFFMANN EITLE**
**Patent- und Rechtsanwälte**
**Arabellastrasse 4**
**81925 München (DE)**

# (54) ELECTROPEELING COMPOSITION, AND MAKING USE OF THE SAME, ADHESIVE AND ELECTROPEELING MULTILAYER ADHESIVE

(57) An object of the invention is to provide an electropeeling composition which, when attached two adhered members, has an enough bond strength and can be easily detached the adherend members following use. An electropeeling composition includes an ionic liquid.

EP 1 914 285 A1

## Description

### Technical Field

The present invention relates to electropeeling compositions and to adhesives, electropeeling multilayer adhesives, coating materials and direct glazing materials making use of such electropeeling compositions.

### Background Art

Detachable pressure-sensitive adhesives are generally attached to the surface of an adherend in the form of a sheet, tape or the like at the time of use, and are detached and removed from the adherend after the purpose of use has been achieved. Such adhesives are used, for example, in surface protection films, masking tape for painting, and sticky sheets such as detachable memos (e.g., sticky notes).

Such adhesives are required to adhere to an adherend without detaching during, for example, transport, storage or processing of the adherend and, once the protective function has been achieved and is no longer needed, to be easily detachable.

Conventional adhesives which satisfy such requirements include adhesives which detach after being aged by exposure to heat, adhesives which are made to detach by causing microcapsules present in the adhesive to thermally expand, and hot-melt adhesives. However, these types of adhesives all have a poor heat resistance due to thermal stimulation, in addition to which the operations involved in their use are complicated.

Patent Document 1 discloses, as an adhesive which satisfies such requirements, "an electrochemically debondable adhesive adapted for bonding and debonding applications on an electrically conductive surface, comprising a high load resistant adhesive polymer having a high mechanical strength and comprising also, as a component or as an additive with respect to the adhesive polymer, an electrolyte, wherein the adhesive has an ionic conductivity in a range of $10^{-11}$ to $10^{-5}$ S/cm$^2$ and a shear strength greater than 200 psi, and is adapted for use as a coating."

However, detachable adhesives, including the adhesive of the foregoing Patent Document 1, have the drawback that, after being attached to an adherend, their bond strength tends to rise due to changes over time, making them difficult to detach from the adherend following use.

Patent Document 1: JP 2003-129030 A

### Disclosure of the Invention

### Problems to be Solved by the Invention

Accordingly, an object of the invention is to provide an electropeeling composition which, when attached to (e.g., bonded to or coated on) an adherend, has an acceptable bond strength to the adherend and can be easily detached from the adherend following use. Further objects of the invention are to provide an adhesive and an electropeeling multilayer adhesive which make use of such compositions.

### Means for Solving the Problems

As a result of extensive investigations, the inventor has found that when a composition which includes an ionic liquid is employed, it is possible both to ensure a satisfactory bond strength while attached and also, following use, to weaken the bond strength and thus facilitate detachment by passing an electrical current through the composition.

The inventor has also found that when a multilayer adhesive composed of two or more adhesive layers having electrical conductivity is employed, with at least one of the adhesive layers containing an ionic liquid, it is possible both to ensure a satisfactory bond strength while attached and also, following use, even if the adherend itself does not conduct electricity, to weaken the bond strength and thus facilitate detachment by passing an electrical current through the adhesive layers. These discoveries ultimately led to the present invention.

The present invention thus provides the electropeeling compositions, adhesives, electropeeling multilayer adhesives, coatings, direct glazing materials, and methods of detachment recited in (1) to (23) below.

(1) An electropeeling composition comprising an ionic liquid.

(2) The electropeeling composition of (1) above, wherein the ionic liquid content is between 0.1 and 30 wt%.

(3) The electropeeling composition of (1) or (2) above, wherein the ionic liquid contains at least one type of anion selected from the group consisting of $Br^-$, $AlCl_4^-$, $Al_2Cl_7^-$, $NO_3^-$, $BF_4^-$, $PF_6^-$, $CH_3COO^-$, $CF_3COO^-$, $CF_3SO_3^-$, $(CF_3SO_2)_2N^-$, $(CF_3SO_2)_3C^-$, $AsF_6^-$, $SbF_6^-$, $F(HF)_n^-$, $CF_3CF_2CF_2CF_2SO_3^-$, $(CF_3CF_2SO_2)_2N^-$ and $CF_3CF_2CF_2COO^-$.

(4) The electropeeling composition of any one of (1) to (3) above, wherein the ionic liquid contains cations of formula

(1) or (2) below

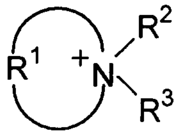

(1)

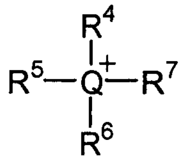

(2)

where, in formula (1), $R^1$ is a hydrocarbon group of 1 to 20 carbons which may include a nitrogen atom, and $R^2$ and $R^3$ are each independently a hydrogen atom or an alkyl group of 1 to 20 carbons which may include a heteroatom, with the proviso that there is no $R^3$ moiety if the nitrogen atom contains a double bond; and in formula (2), Q is a nitrogen, phosphorus, sulfur or carbon atom, and $R^4$, $R^5$, $R^6$ and $R^7$ are each independently a hydrogen atom or an alkyl group of 1 to 8 carbons which may include a heteroatom, with the proviso that there is no $R^7$ moiety if Q is a sulfur atom.

(5) The electropeeling composition of any one of (1) to (4) above, wherein the ionic liquid has a melting point of 100°C or below.
(6) The electropeeling composition of any one of (1) to (5) above which additionally comprises a polymer.
(7) The electropeeling composition of (6) above, wherein the polymer has a glass transition point of 60°C or below.
(8) The electropeeling composition of (6) or (7) above, wherein the polymer is a urethane prepolymer.
(9) The electropeeling composition of (6) above, wherein the polymer is an epoxy resin.
(10) The electropeeling composition of any one of (6) to (9) above which additionally comprises between 1 and 200 parts by weight of an electrically conductive filler per 100 parts by weight of the polymer.
(11) An adhesive which makes use of the electropeeling composition of any one of (1) to (10) above.
(12) The adhesive of (11) above which is moisture-curing.
(13) An electropeeling multilayer adhesive which makes use of the electropeeling composition of any one of (1) to (10) above, wherein the adhesive comprises two or more adhesive layers which are electrically conductive and contain the polymer, at least one of which layers includes the ionic liquid.
(14) The electropeeling multilayer adhesive of (13) above, wherein the content of the ionic liquid is between 1 and 50 parts by weight per 100 parts by weight of the polymer in the ionic liquid-containing adhesive layer.
(15) The electropeeling multilayer adhesive of (13) or (14) above which is moisture-curing.
(16) A coating agent which makes use of the electropeeling composition of any one of (1) to (10) above.
(17) The coating agent of (16) above which includes a covering material for coating onto a substrate.
(18) A direct glazing material which makes use of the adhesive of (11) or (12) above.
(19) A direct glazing material which makes use of the electropeeling multilayer adhesive of any one of (13) to (15) above.
(20) A method of detachment which comprises the steps of passing electricity through the adhesive on one member bonded using the adhesive of (11) or (12) above, then detaching the member from another member.
(21) A method of detachment which comprises the steps of passing electricity through the adhesive on one member bonded using the electropeeling multilayer adhesive of any one of (13) to (15) above, then detaching the member from another member.
(22) A method of detachment which comprises the steps of, applying the coating agent of (16) onto a substrate, applying a covering material over the coating agent, passing electricity through the coating agent, then detaching the covering material from the substrate.
(23) A method of detachment which comprises the steps of applying a covering material onto a substrate using the coating agent of (17) above, passing electricity through the coating agent, then detaching the covering material from the substrate.

Effects of the Invention

As described below, the present invention is useful in that it is able to provide an electropeeling composition which, when attached to an adherend, has an acceptable bond strength to the adherend and which can be easily

detached from the adherend following use. Therefore, by using the electropeeling composition of the invention, the recycling of adherends can be promoted, which is highly beneficial.

The present invention is additionally useful in that it is able to provide an electropeeling multilayer adhesive which, when attached to an adherend, has an acceptable bond strength and which, even if the adherend itself does not conduct electricity, can be easily detached from the adherend following use. Accordingly, by using the electropeeling multilayer adhesive of the invention, the recycling of adherends can be promoted, which is highly beneficial.

Brief Description of the Drawings

FIG. 1 is a schematic cross-sectional view showing a preferred embodiment of the multilayer adhesive of the invention.
FIG. 2 shows a test specimen furnished for an adhesion test.
FIG. 3 shows a test specimen furnished for an adhesion test.
FIG. 4 is a graph showing the relationship between the tensile shear bond strength and the detachment time.

Legend

1,2: Adherends
3: Multilayer adhesive
31, 32, 33: Adhesive layers

Best Mode for Carrying Out the Invention

The electropeeling composition of the invention (also referred to below as the "inventive composition") is a composition which includes an ionic liquid.
For use as an adhesive or a coating agent, it is preferable that the inventive composition include a polymer.
If the inventive composition lacks electrically conductivity, it is preferable for the composition to include a conductive filler so as to enable electricity to be passed through the composition and thereby cause the ionic liquid to electrolyze.
The ionic liquid, polymer and conductive filler are described below in detail.

Ionic Liquid

The ionic liquid is a fused salt that is a liquid at room temperature, and is also called a normal-temperature fused salt. Its properties include the absence of vapor pressure (it is non-volatile), a high heat resistance, nonflammability, and chemical stability.
Because the inventive composition includes such an ionic liquid, when electricity is passed through the composition following use of the composition for, e.g., bonding to or coating a steel sheet, electrolysis of the ionic liquid is believed to occur, with the anions migrating to the anode side (the interface with the sheet steel), giving rise to oxidation, and the cations migrating to the anode side, giving rise to reduction. The adhesive interface presumably weakens as a result, which facilitates peeling.

The ionic liquid contains cations and, as the counterions thereto, anions.
Preferred examples of the cations include cations of formula (1) or (2) below.

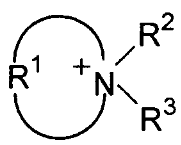

(1)

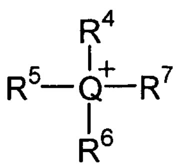

(2)

In formula (1), $R^1$ is a hydrocarbon group of 1 to 20 carbons which may include a nitrogen atom; and $R^2$ and

$R^3$ are each independently a hydrogen atom or an alkyl group of 1 to 20 carbons which may include a heteroatom, with the proviso that there is no $R^3$ moiety if the nitrogen atom includes a double bond.
In formula (2), Q is a nitrogen, phosphorus, sulfur or carbon atom; and $R^4$, $R^5$, $R^6$ and $R^7$ are each independently a hydrogen atom or an alkyl group of 1 to 8 carbons which may include a heteroatom, with the proviso that there is no $R^7$ moiety if Q is a sulfur atom.

The cation of above formula (1) is exemplified by cyclic amidine ions such as imidazolium ions, and pyridinium ions. Preferred examples include cations of the formulas (3) to (5) below.

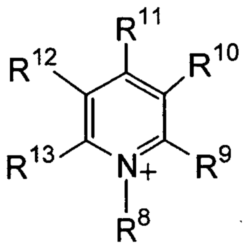

(3)

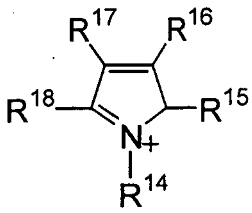

(4)

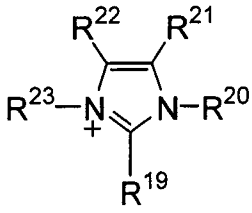

(5)

In formulas (3) to (S), $R^8$ to $R^{23}$ are each independently a hydrocarbon group of 1 to 20 carbons which may have a nitrogen atom.
Specific examples include the following cations.

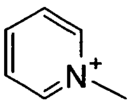

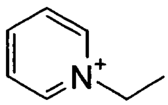

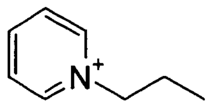

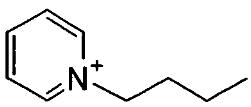

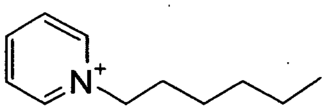

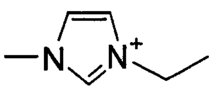

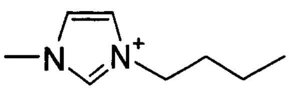

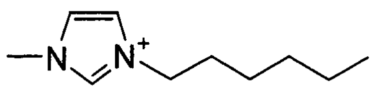

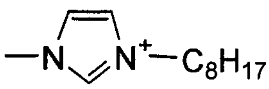

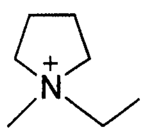

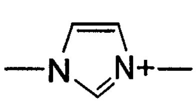
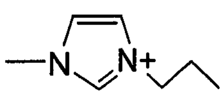
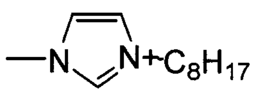
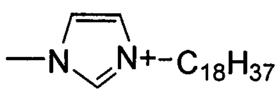

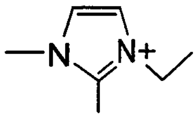
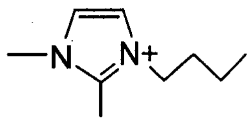
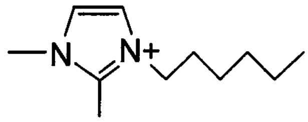

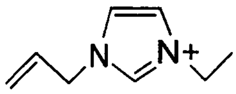
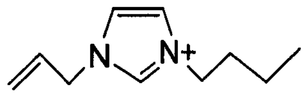
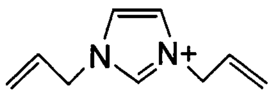

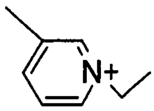
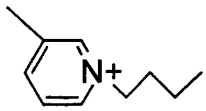
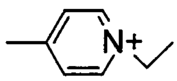
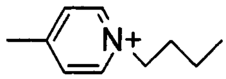

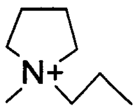
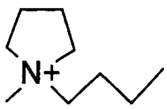
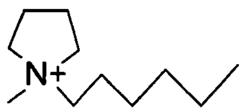
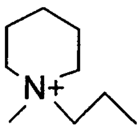
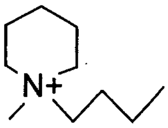

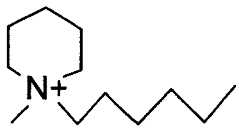

The cation of above formula (2) is exemplified by organic cations such as ammonium ions, sulfonium ions and phosphonium ions. Specific examples include the following cations.

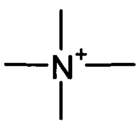
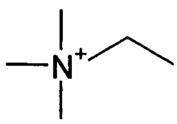
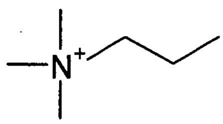

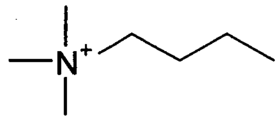

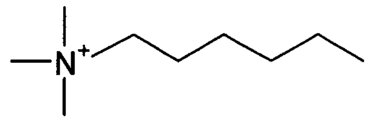

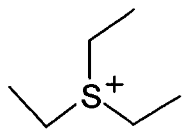

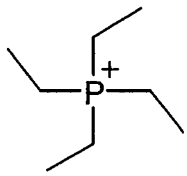

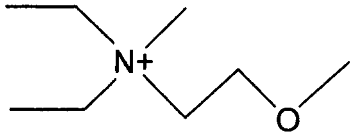

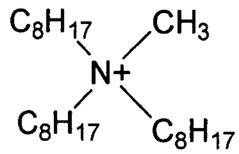

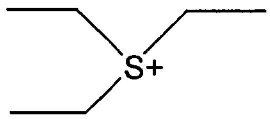

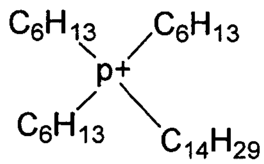

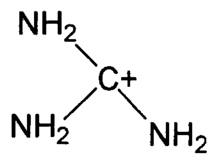

Preferred examples of the anion include $Br^-$, $AlCl_4^-$, $Al_2Cl_7^-$, $NO_3^-$, $BF_4^-$, $PF_6^-$, $CH_3COO^-$, $CF_3COO^-$, $CF_3SO_3^-$, $(CF_3SO_2)_2N^-$, $(CF_3SO_2)_3C^-$, $AsF_6^-$, $SbF_6^-$, $F(HF)_n^-$, $CF_3CF_2CF_2CF_2SO_3^-$, $(CF_3CF_2SO_2)_2N^-$ and $CF_3CF_2CF_2COO^-$. Of these, $BF_4^-$, $PF_6^-$ and $(CF_3SO_2)_2N^-$ are preferred for their low melting point and high heat resistance.

The ionic liquid is exemplified by combinations of the above-mentioned cations and anions. Commercial products may be used as such ionic liquids. For example, the products IL-A2, IL-C3, IL-P10 and IL-P14 shown below, all made by Koei Chemical Co., Ltd., may be used. Such ionic liquids are also available from Nisshinbo Industries, Inc., Nippon Synthetic Chemical Industry Co., Ltd., Toyo Gosei Co., Ltd., Tokyo Chemical Industry Co., Ltd., and Sigma-Aldrich Japan K.K.

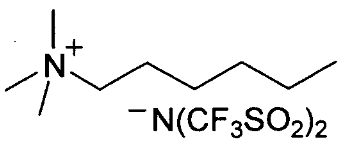

IL-A2

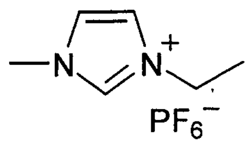

IL-C3

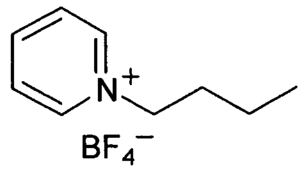

IL-P10

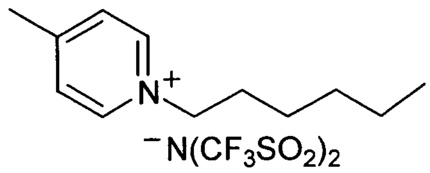

IL-P14

In the practice of the invention, for easy peeling from the adherend following use, that is, for peeling at normal temperatures (about 0 to 45°C), the above-described ionic liquid has a melting point of preferably 100°C or below, more preferably 60°C or below, and even more preferably room temperature or below.

Moreover, in the practice of the invention, the content of the ionic liquid is preferably from 0.1 to 30 wt%, and more preferably from 0.1 to 10 wt%. A content within this range is desirable because the adhesive properties at the time of attachment when the inventive composition is used as an adhesive are better.

Also, in the practice of the invention, because the cured form of the inventive composition is required to have strength, it is preferable to set the ionic liquid content to 10 wt% or less. On the other hand, to shorten the detachment time and facilitate detachment from the adherend following use, it is preferable to set the ionic liquid content to at least 1 wt%.

## Polymer

The polymer is not subject to any particular limitation, so long as it is a common organic polymeric compound. The polymer may even be an oligomer having a number-average molecular weight of about 1,000.

Illustrative examples of such polymers include thermoplastic synthetic resins such as polyolefin resins, polyolefin emulsions, EVA (ethylene-vinyl acetate copolymer) resins, vinyl acetate resins, vinyl acetate copolymers, ionomer resins, acrylic resins, acrylic copolymers, cyanoacrylate resins, vinyl chloride resins, polyvinyl acetal resins, polyurethane resins, polyester resins and polyamide resins; thermosetting synthetic resins such as acrylic resins, maleimide resins, urea resins, melamine resins, phenolic resins, epoxy-phenolic resins, epoxy resins, polyurethane resins, urethane prepolymers, unsaturated polyester resins and diallyl phthalate resins; moisture-curing resins such as urethane prepolymers and modified silicone resins; synthetic rubbers such as chloroprene rubber, nitrile rubber and styrene-butadiene rubber; natural rubber; reclaimed rubber; and natural polymers such as starches, proteins, natural resins and asphalt/tar.

Preferred examples include the urethane prepolymers, epoxy resins and modified silicone resins described below.

## Urethane Prepolymers

The above urethane prepolymers are, like ordinary one-component polyurethane resin compositions, reaction products obtained by reacting a polyol compound with an excess of a polyisocyanate compound (i.e., an excess of isocyanate (NCO) groups with respect to hydroxyl (OH) groups). Such prepolymers generally include from 0.5 to 10 wt% of NCO groups at the ends of the molecule.

The NCO groups on such urethane prepolymers react with moisture in air to form crosslink points, which is advantageous in that the inventive compositions can be used as moisture-curing adhesives.

The polyisocyanate compound used to form such a urethane prepolymer is not subject to any particular limitation provided it has two or more NCO groups on the molecule. Specific examples include aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, xylylene diisocyanate (XDI), tetramethylxylylene diisocyanate (TMXDI), tolidine diisocyanate (TODI), 1,5-naphthalene diisocyanate (NDI), polymethylenephenylene polyisocyanate (polymeric MDI) and triphenylmethane triisocyanate; aliphatic polyisocyanates such as hexamethylene diisocyanate (HDI), trimethylhexamethylene diisocyanate (TMHDI), lysine diisocyanate and norbornane diisocyanate (NBDI); alicyclic polyisocyanates such as transcyclohexane-1,4-diisocyanate, isophorone diisocyanate (IPDI), $H_6XDI$ (hydrogenated XDI), $H_{12}MDI$ (hydrogenated MDI) and $H_6TDI$ (hydrogenated TDI); carbodiimide-modified polyisocyanates of these isocyanate compounds; isocyanurate-modified polyisocyanates of these isocyanate compounds; and urethane prepolymers obtained by reacting these isocyanate compounds with the subsequently described polyol compounds. These may be used singly or as combinations of two or more thereof.

In addition, monoisocyanate compounds having only one NCO group on the molecule may be used in admixture with a diisocyanate compound or the like.

The polyol compound used to such a urethane prepolymer is not subject to any particular limitation with respect

to its molecular weight, skeleton and the like, provided it is a compound having two or more OH groups. Examples include low-molecular-weight polyhydric alcohols, polyether polyols, polyester polyols, other types of polyols, and polyol mixtures thereof.

Specific examples of low-molecular-weight polyhydric alcohols include low-molecular-weight polyols such as ethylene glycol (EG), diethylene glycol, propylene glycol (PG), dipropylene glycol, 1,3-butanediol, 1,4-butanediol, pentanediol, neopentyl glycol, hexanediol, cyclohexanedimethanol, glycerol, 1,1,1-trimethylolpropane (TMP), 1,2,5-hexanetriol and pentaerythritol; and sugars such as sorbitol.

Next, the polyether polyols and polyester polyols may generally be compounds derived from the above low-molecular-weight polyhydric alcohols. In the practice of the invention, compounds derived from the aromatic diols, amines and alkanolamines shown below may also be suitably used.

Here, specific examples of aromatic diols include resorcinol (m-dihydroxybenzene), xylylene glycol, 1,4-benzene dimethanol, styrene glycol, 4,4'-dihydroxyethyl phenol; and compounds having bisphenol skeletons of the bisphenol A structure (4,4'-dihydroxyphenylpropane), bisphenol F structure (4,4'-dihydroxyphenylmethane), brominated bisphenol A structure, hydrogenated bisphenol A structure, bisphenol S structure and bisphenol AF structure shown below.

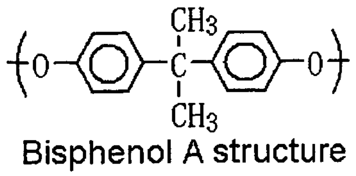

Bisphenol A structure

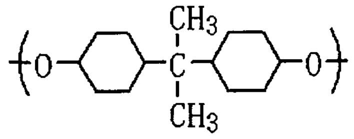

Hydrogenated bisphenol A structure

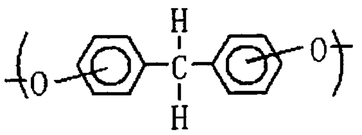

Bisphenol F structure

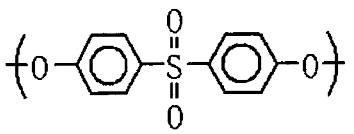

Bisphenol S structure

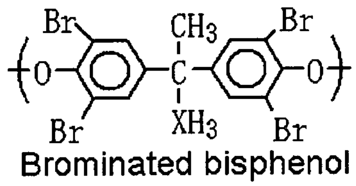

Brominated bisphenol A structure

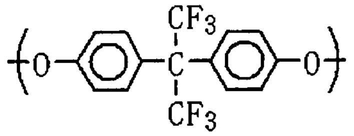

Bisphenol AF structure

Specific examples of amines include ethylenediamine and hexamethylenediamine. Specific examples of alkanolamines include ethanolamine and propanolamine.

Specific examples of polyether polyols include polyols obtained by the addition reaction of at least one oxide selected from among styrene oxide and alkylene oxides such as ethylene oxide, propylene oxide, butylene oxide (tetramethylene oxide) and tetrahydrofuran with at least one compound selected from the above-mentioned low-molecular-weight alcohols, aromatic diols, amines and alkanolamines.

Illustrative examples of such polyether polyols include polyethylene glycol, polypropylene glycol (PPG), polypropylene triol, ethylene oxide/propylene oxide copolymers, polytetramethylene ether glycol (PTMEG), polytetraethylene glycol and sorbitol-type polyols.

Illustrative examples of polyether polyols having bisphenol skeletons include polyether polyols obtained by the addition reaction of ethylene oxide and/or propylene oxide with bisphenol A (4,4'-dihydroxyphenylpropane).

Likewise, illustrative examples of polyester polyols include the condensation products (condensed polyester polyols) of any of the above-mentioned low-molecular-weight polyhydric alcohols, aromatic diols, amines or alkanolamines with a polybasic carboxylic acid; lactone-type polyols; and polycarbonate polyols.

Examples of polybasic carboxylic acids which may be used here to form the foregoing condensed polyester polyol include

glutaric acid, adipic acid, azelaic acid, fumaric acid, maleic acid, pimelic acid, suberic acid, sebacic acid, phthalic acid, terephthalic acid, isophthalic acid, dimer acid, pyromellitic acid, other low-molecular-weight carboxylic acids, oligomeric acids, castor oil, and hydroxycarboxylic acids such as the reaction product of castor oil with ethylene glycol (or propylene glycol).

Examples of lactone-type polyols include compounds obtained by the ring-opening polymerization of a lactone such as propiolactone, valerolactone, ε-caprolactone, α-methyl-ε-caprolactone or ε-methyl-ε-caprolactone with a suitable polymerization initiator, and having hydroxyl groups at both ends.

Illustrative examples of polyester polyols having a bisphenol skeleton include condensed polyester polyols obtained by using, in place of the above-described low-molecular-weight polyhydric alcohol, or together with a low-molecular-weight polyhydric alcohol, a bisphenol skeleton-containing diol. Specific examples include polyester polyols obtained from bisphenol A and castor oil, and polyester polyols obtained from bisphenol A, castor oil, ethylene glycol and propylene glycol.

Examples of other polyols include polymeric polyols having carbon-carbon bonds on the main-chain skeleton, such as acrylic polyols, polybutadiene polyols, and hydrogenated polybutadiene polyols.

In the practice of the invention, the various polyol compounds mentioned above may be used singly or as combinations of two or more thereof.

Of these, in terms of the availability of the materials, polypropylene glycol is preferred.

The urethane prepolymer that may be preferably used in the inventive composition is, as described above, obtained by reacting a polyol compound with an excess of a polyisocyanate compound. Specific examples include those compounds obtained by combining any of the various polyol compounds mentioned above with any of the various polyisocyanate compounds mentioned above.

In the practice of the invention, it is preferable for a number of reasons that the above-mentioned polyurethane prepolymer have a polyether structure on the main chain. These reasons include a lower glass transition temperature, easier migration of the cations and anions when an electrical current is applied, and also synthesis of the urethane polymer at a low viscosity as well as the flexibility of inventive compositions containing the urethane polymer and of adhesives in which the inventive compositions are used.

Epoxy Resin

The epoxy resin is a resin composed of a compound having two or more oxirane rings (epoxy groups) on the molecule, and generally has an epoxy equivalent weight of between 90 and 2,000.

The epoxy resin may be a known epoxy resin.

Illustrative examples include difunctional glycidyl ether-type epoxy resins, such as bisphenol group-bearing epoxy compounds (e.g., bisphenol A, bisphenol F, brominated bisphenol A, hydrogenated bisphenol A, bisphenol S, bisphenol AF, and biphenyl-type epoxy compounds), polyalkylene glycol and alkylene glycol-type epoxy compounds, naphthalene ring-bearing epoxy compounds, and fluorene group-containing epoxy compounds;

polyfunctional glycidyl ether-type epoxy compounds (e.g., phenolic novolak, orthocresol novolak, DPP novolak, trishydroxyphenylmethane, trifunctional, and tetraphenylethane-type epoxy compounds);

glycidyl ester-type epoxy resins of synthetic fatty acids such as dimer acid;

glycidylamino group-bearing aromatic epoxy resins (glycidylamine-type epoxy resins), such as N,N,N',N'-tetraglycidyldiaminodiphenylmethane (TGDDM) of formula (6) below, tetraglycidyldiaminodiphenylsulfone (TGDDS), tetraglycidyl-m-xylylenediamine (TGMXDA), triglycidyl-p-aminophenol of formula (7) below, triglycidyl-m-aminophenol, N,N-diglycidylaniline, tetraglycidyl-1,3-bisaminomethylcyclohexane (TG1,3-BAC) and triglycidyl isocyanurate (TGIC);

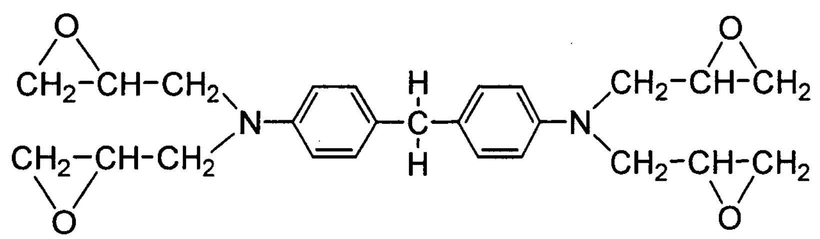

(6)

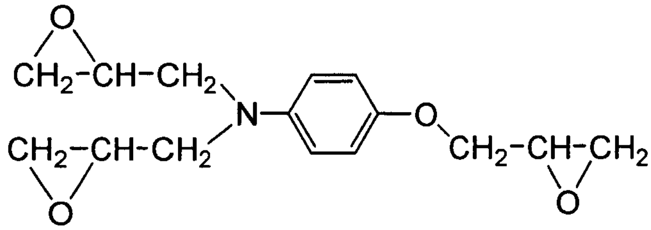

(7)

epoxy compounds having the tricyclo[5,2,1,$0^{2,6}$]decane ring shown in formula (8) below, such as epoxy compounds which can be prepared by a known method that involves polymerizing dicyclopentadiene with a cresol such as metacresol or a phenol, then reacting epichlorohydrin

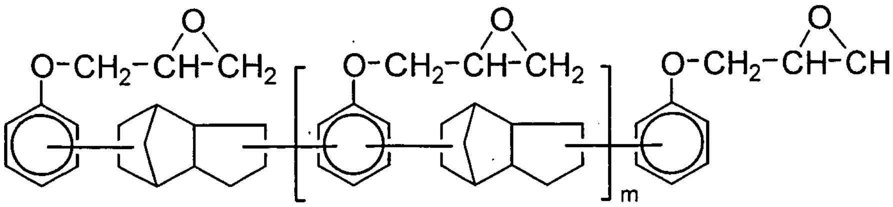

(8)

(in the formula, m is an integer from 0 to 15);

alicyclic epoxy resins; epoxy resins having a sulfur atom on the epoxy resin main chain, such as Flep 10 produced by Toray Thiokol Co., Ltd.; urethane-modified epoxy resins having urethane bonds; and rubber-modified epoxy resins containing polybutadiene, liquid polyacrylonitrile-butadiene rubber or acrylonitrile-butadiene rubber (NBR).

In the practice of the invention, the various types of epoxy resins mentioned above may be used singly or as combinations of two or more thereof.

Commercial products may be used as these epoxy resins. Specific examples of commercial products that may be used include bisphenol A-type epoxy resins such as Epikote 828 and Epikote 154, both products of Japan Epoxy Resin; bisphenol A-type epoxy resins such as EP-4100, produced by Asahi Denka Kogyo K.K.; and bisphenol F-type epoxy resins such as Epikote 806 and Epikote 807, both products of Japan Epoxy Resin.

In the practice of the invention, when such an epoxy resin is used, it is preferable to use a curing agent capable of reacting with the epoxy resin. By including a curing agent, even with the use of an epoxy resin, it is possible to employ the inventive composition as a room temperature-curing adhesive.

Such curing agents are exemplified by amine compounds, acid anhydride compounds, amide compounds, phenolic compounds, thiol compounds, imidazole, boron trifluoride-amine complexes and guanidine derivatives. Of these, amine compounds and thiol compounds are preferred. Employing a general-purpose bisphenol A-type epoxy resin as the epoxy resin is especially preferable because the use of polyamide amine and polythiol can bring the glass transition temperature for the cured material close to room temperature.

Modified Silicone Resin

The modified silicone resin is a polymer having alkylene oxide monomer units on the main chain and having at least one hydrolyzable silicon-containing group per molecule.

In the practice of the invention, the hydrolyzable silicon-containing group may be present at the end of the polymer molecule, on a side chain, or both at the end and on a side chain.

Examples of the alkylene oxide monomer units present on the main chain of the modified silicone resin include constitutional repeating units such as $-CH_2CH_2O-$,$-CH_2CH(CH_3)O-$, $-CH_2CH\ (CH_2H_5)O-$, $-CH(CH_3)CH_2O-$, $-CH(C_2H_5)CH_2O-$, $-CH_2CH_2CH_2O-$ and $-CH_2CH_2CH_2CH_2O-$. The modified silicone resin may be composed of only one such type of constitutional repeating unit or of two or more types.

The hydrolyzable silicon-containing group in the modified silicone resin is a silicon-containing group which has a hydroxyl group and/or a hydrolyzable group bonded to a silicon atom, and which, in the presence of moisture or a crosslinking agent and, if necessary, with the use of a catalyst or the like, is capable of crosslinking by giving rise to a condensation reaction and thus forming siloxane bonds.

Such groups are exemplified by alkoxysilyl, alkenyloxysilyl, acyloxysilyl, aminosilyl, aminoxysilyl, oximesilyl and amidosilyl

groups.
Examples of such groups that are suitable for use include the alkoxysilyl, alkenyloxysilyl, acyloxysilyl, aminosilyl, aminoxysilyl, oximesilyl and amidosilyl groups of the following formulas.
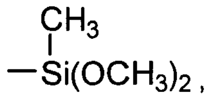 , $-Si(OCH_3)_3$ ,

$-Si(OCH_3)_2OSi(CH_3)_3$ , 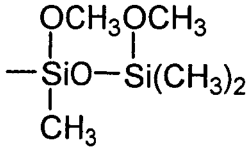 , $-Si(OC_2H_5)_3$ ,

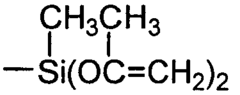 , 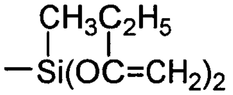 , 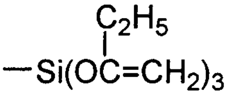 ,

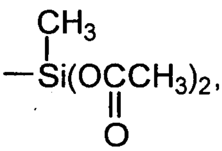 , 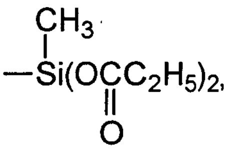

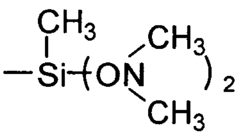 , 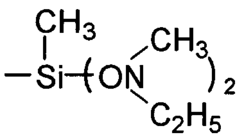 ,

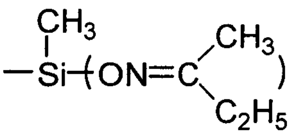 , 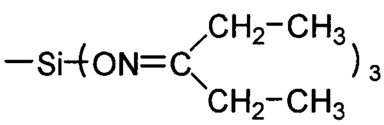 ,

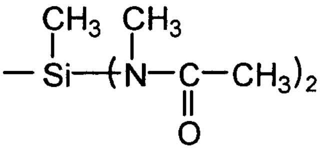 , 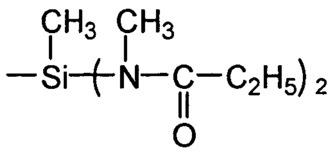

Of these, alkoxysilyl groups are preferred from the standpoint of handleability.
The alkoxy group bonded to the silicon atom on the alkoxysilyl group is not subject to any particular limitation. However, owing to the ready availability of the starting materials, preferred examples include methoxy, ethoxy and propoxy groups. Groups other than the alkoxy group bonded to the silicon atom on the alkoxysilyl group are not subject to any particular limitation, although preferred examples include hydrogen atoms, and alkyl, alkenyl or arylalkyl groups having up to 20 carbon atoms, such as methyl, ethyl, propyl and isopropyl.
In the practice of the invention, the modified silicone resin is preferably an alkoxysilane with a functionality of two or more which has two or more alkoxysilyl groups on the molecule. Alkoxysilanes with a functionality of 3 to 20 are

more preferred on account of the readily availability of the starting materials.

Moreover, in the practice of the invention, no particular limitation is imposed on the molecular weight of the modified silicone resin. However, from the standpoint of workability and other considerations, a polystyrene-equivalent number-average molecular weight as determined by gel permeation chromatography (GPC) of 50,000 or less is preferred.

Examples of such modified silicone resins that may be used include known resins such as those mentioned in the following patent publications: JP 45-36319 B, JP 46-12154 B, JP 49-32673 B, JP 50-156599 A, JP 51-73561 A, JP 54-6096 A, JP 55-82123 A, JP 55-123620 A, JP 55-125121 A, JP 55-131022 A, JP 55-135135 A, JP 55-137129 A, and JP 3-72527 A. Examples of commercial products that may be used include MSP S203, S303, S810 and S943, all products of Kaneka Corporation; and EXCESTAR ES-S2410, ES-S2420, ES-S3430 and ES-S3630, all products of Asahi Glass Co., Ltd.

In the practice of the invention, for easy separation from the adherend following use, that is, for separation at a normal temperature (about 0 to 45°C), it is preferable for the above polymer to have a glass transition temperature of 30°C or below.

Also, in the practice of the invention, to facilitate migration of the cations and anions when an electrical current is applied, it is preferable for the above polymer to have a glass transition temperature of 30°C or below.

Moreover, it is desirable for the above polymer to be a urethane prepolymer because adhesion is possible by moisture-curing a one-part adhesive and the glass transition temperature is low.

Conductive Filler

The conductive filler is not subject to any particular limitation and may be any of various known conductive fillers, provided it is an additive having electrical conductivity. Preferred examples include graphite, carbon black, carbon fibers, and metal powders such as silver or copper.

In the practice of the invention, the content of such a conductive filler is preferably between 1 and 200 parts by weight, and more preferably between 10 and 100 parts by weight, per 100 parts by weight of the above-described polymer. A conductive filler content in this range is preferable for the inventive composition to have an acceptable electrical conductivity.

It will be desirable in some cases for the inventive composition to include a silane coupling agent.

No particular limitation is imposed on the silane coupling agent, provided it is a silane coupling agent already known in the art as a tackifier. Exemplary silane coupling agents include aminosilanes, vinylsilanes, epoxysilanes, methacrylsilanes, isocyanatosilanes, ketimine silanes, and mixtures or reaction products thereof. Additional examples include compounds obtained by reacting any of these with a polyisocyanate.

The aminosilanes are not subject to any particular limitation, provided they have an amino group or imino group and a hydrolyzable silicon-containing group.

Specific examples include 3-aminopropyltrimethoxysilane, 3-aminopropyltriethoxysilane, 3-aminopropylmethyldimethoxysilane, 3-aminopropylethyldiethoxysilane, bistrimethoxysilylpropylamine, bistriethoxysilylpropylamine, bismethoxydimethoxysilylpropylamine, bisethoxydiethoxysilylpropylamine, N-2-(aminoethyl)-3-aminopropyltrimethoxysilane, N-2-(aminoethyl)-3-aminopropylmethyldimethoxysilane, N-2-(aminoethyl)-3-aminopropyltriethoxysilane and N-2-(aminoethyl)-3-aminopropylethyldiethoxysilane.

Examples of vinylsilanes include vinyltrimethoxysilane, vinyltriethoxysilane and tris(2-methoxyethoxy)vinylsilane.

Examples of epoxysilanes include γ-glycidoxypropyltrimethoxysilane, γ-glycidoxypropyldimethylethoxysilane, γ-glycidoxypropylmethyldiethoxysilane, β-(3,4-epoxycyclohexyl)ethylmethyldimethoxysilane, γ-glycidoxypropyltrimethoxysilane and β-(3,4-epoxycyclohexyl)ethyltrimethoxysilane.

Examples of methacrylsilanes include 3-methacryloxypropylmethyldimethoxysilane, 3-methacryloxypropyltrimethoxysilane, 3-methacryloxypropylmethyldiethoxysilane and 3-methacryloxypropyltriethoxysilane.

Examples of isocyanatosilanes include isocyanatopropyltriethoxysilane and isocyanatopropyltrimethoxysilane.

Examples of ketiminesilanes include ketiminated propyltrimethoxysilane and ketiminated propyltriethoxysilane.

In the practice of the invention, when such a silane coupling agent is used, the content is preferably between 0.1 and 10 parts by weight, and more preferably between 1 and 5 parts by weight, per 100 parts by weight of the polymer. A silane coupling agent content within this range is preferable because the adhesive properties at the time of attachment when the inventive composition is used as an adhesive are better.

Insofar as the objects of the invention are attainable, the inventive composition may include, if necessary, various additives, such as fillers other than the above-described electrically conductive filler, plasticizers, antidegradants, antioxidants, pigments (dyes), thixotropic agents, ultraviolet absorbers, fire retardants, solvents, surfactants (including leveling agents), dehydrating agents, rust inhibitors, tackifiers other than the above-described silane coupling agents, and antistatic agents.

Examples of fillers other than conductive fillers include silica, iron oxide, zinc oxide, aluminum oxide, titanium

oxide, barium oxide, magnesium oxide, calcium carbonate, magnesium carbonate, zinc carbonate, pyrophyllite clay, kaolin clay, and fired clay.

The plasticizer may be a known plasticizer used in ordinary resin compositions and rubber compositions. Specific examples include oils such as paraffin oils, process oils and aromatic oils; liquid rubbers such as liquid polyisoprene (LIR), liquid polybutadiene (LBR) and liquid ethylene-propylene rubber (LEPM); tetrahydrophthalic acid, azelaic acid, benzoic acid, phthalic acid, trimellitic acid, pyromellitic acid, adipic acid, sebacic acid, fumaric acid, maleic acid, itaconic acid, citric acid, and derivatives thereof; dioctyl phthalate (DOP) and dibutyl phthalate (DBP); polybutene; dioctyl adipate, diisononyl adipate (DINA) and isodecyl succinate; diethylene glycol dibenzoate and pentaerythritol ester; butyl oleate and methyl acetylricinoleate; tricresyl phosphate and trioctyl phosphate; adipic acid-propylene glycol polyester, and adipic acid-butylene glycol polyester. These may be used singly or as mixtures of two or more thereof.

Of the above, the use of oils and polybutene are preferable from the standpoint of the oil bleeding properties and processability.

Illustrative examples of antidegradants include hindered phenol compounds and aliphatic and aromatic hindered amine compounds.

Illustrative examples of antioxidants include butylhydroxytoluene (BHT) and butylhydroxyanisole (BHA).

Illustrative examples of pigments include inorganic pigments such as titanium dioxide, zinc oxide, ultramarine blue, red iron oxide, lithopone, lead, cadmium, iron, cobalt, aluminum, hydrochlorides and sulfates; and organic pigments such as azo pigments and copper phthalocyanine pigments.

Illustrative examples of thixotropic agents include bentonite, silicic acid anhydride, silicic acid derivatives and urea derivatives.

Illustrative examples of ultraviolet absorbers include 2-hydroxybenzophenone, benzotriazole and salicylic acid esters.

Illustrative examples of fire retardants include phosphorus-based compounds such as TCP; halogen-based compounds such as chlorinated paraffins and perchloropentacyclodecane; antimony-based compounds such as antimony oxide; and aluminum hydroxide.

Illustrative examples of solvents include hydrocarbons such as hexane and toluene, halogenated hydrocarbons such as tetrachloromethane, ketones such as acetone and methyl ethyl ketone, ethers such as diethyl ether and tetrahydrofuran, and esters such as ethyl acetate.

Illustrative examples of surfactants (leveling agents) include polybutyl acrylate, polydimethyl siloxane, modified silicone compounds and fluorine-based surfactants.

Illustrative examples of dehydrating agents include vinylsilane.

Illustrative examples of rust inhibitors include zinc phosphate, tannic acid derivatives, phosphoric acid esters, basic sulfonic acid salts and various types of rust-inhibiting pigments.

Illustrative examples of tackifiers other than silane coupling agents include titanium coupling agents and zirconium coupling agents.

Examples of antistatic agents include quaternary ammonium salts, and hydrophilic compounds such as polyglycols and ethylene oxide derivatives.

No particular limitation is imposed on the method for preparing the inventive composition. For example, the composition may be prepared by using an apparatus such as a roll mill, kneader, pressure kneader, Banbury mixer, single-screw extruder, twin-screw extruder or universal mixer to mix together the above-described ionic liquid, polymer, conductive filler and various additives.

The adhesive of the invention is an adhesive obtained by using the inventive electropeeling composition of the invention. As noted above, a moisture curing adhesive that makes use of a urethane prepolymer is preferred.

The coating agent of the invention is a coating agent that makes use of the above-described electropeeling composition of the invention.

The inventive coating agent preferably includes a covering material (e.g., paint, rust inhibitor or the like) for coating onto a substrate. However, in embodiments where first the coating agent is applied, then a covering material is applied thereon, the coating agent need not include a covering material.

Illustrative examples of coating resins that may be used here in the coating agent include rosin, ester gum, penta resin, coumarone-indene (Cumar) resin, phenolic resins, modified phenolic resins, maleic resins, alkyd resins, amino resins, vinyl resins, petroleum resins, epoxy resins, polyester resins, polystyrene resins, acrylic resins, silicone resins, rubber-based resins, chlorinated resins, urethane resins, polyamide resins, polyimide resins, fluorocarbon resins and lacquer.

The direct glazing material of the invention is a sealant which makes use of the above-described inventive adhesive and directly bonds together the body and window glass of an automobile.

The present invention provides a method of detachment when the above-described electropeeling composition of the invention has been used as an adhesive. Specifically, the invention provides a method of detachment which includes the steps of passing electricity through the adhesive on one member bonded using the adhesive of the invention, then detaching the member from another member.

The method of passing electricity is exemplified by a method in which, when two steel sheets, for example, have been

bonded together using the inventive adhesive, the positive electrode of a DC power supply is attached to one of the steel sheets, the negative electrode is attached to the other steel sheet, and a current of about 1 to 100 V is applied for a period of between about several seconds (e.g., 10 seconds) and about 10 minutes. Either a direct current or an alternating current may be used. By applying a current in this way, the two bonded steel sheets can be separated. As already discussed above, this is believed to occur as follows. Because the inventive composition includes an ionic liquid, applying an electrical current causes electrolysis of the ionic liquid to occur, with anions migrating to the anode side (the interface with one adherend), giving rise to oxidation, and cations migrating to the cathode side (the interface with the other adherend), giving rise to reduction. As a result, the adhesive interface weakens, which facilitates detachment.

The invention also provides a method of detachment when the above-described electropeeling composition of the invention has been used as a coating agent.

Specifically, the invention provides a method of detachment in which, if the coating agent of the invention does not include a covering material, the coating agent is applied onto a substrate, a covering material is applied onto the coating agent, and electricity is passed through the coating agent, following which the covering material is peeled from the substrate. The invention also provides a method of detachment in which, if the coating agent of the invention includes a covering material, the covering material is applied onto the substrate using the coating agent, electricity is passed through the coating agent, then the covering material is peeled from the substrate.

The method of passing electricity is exemplified by a method in which, when paint has been applied to a steel sheet using the inventive coating agent, an electrode (the negative electrode) is placed in close contact with the painted surface, the positive electrode is attached to the steel sheet side, and a current of about 1 to 100 V is applied for a period of between about 10 seconds to about 10 minutes. By passing through electricity in this way, the coat of paint on the steel sheet can be stripped off.

The electropeeling multilayer adhesive of the invention (also referred to below as the "inventive multilayer adhesive") is an adhesive which makes use of the above-described electropeeling composition of the invention. The adhesive is composed of two or more adhesive layers which are electrically conductive and contain the above-described polymer. At least one of the adhesive layers contains the above-mentioned ionic liquid.

Because the inventive multilayer adhesive includes the above-described ionic liquid in at least one of the adhesive layers, passing electricity through the adhesive is believed to cause the ionic liquid to electrolyze, with anions migrating to the anode side (the interface with one of the adherends), giving rise to oxidation, and cations migrating to the anode side (the interface with the other adherend), giving rise to reduction. This presumably causes the adhesive interface to weaken, facilitating detachment.

The ionic liquid content of the inventive multilayer adhesive is preferably between 1 and 50 parts by weight, and more preferably between 5 and 30 parts by weight, per 100 parts by weight of the polymer in the ionic liquid-containing adhesive layer. A content within this range is preferable because the multilayer adhesive of the invention has better adhesive properties.

In the multilayer adhesive of the invention, the polymer within the ionic liquid-containing adhesive layer has a glass transition temperature of preferably 60°C or below, and more preferably room temperature or below. At a glass transition temperature in this range, when the ionic liquid is electrolyzed, the cations and anions more readily migrate.

In the multilayer adhesive of the invention, the above-described conductive filler is included in the ionic liquid-containing adhesive layer.

When the conductive filler is included in the inventive composition, the conductive filler content is preferably between 1 and 200 parts by weight, and more preferably between 10 and 100 parts by weight, per 100 parts by weight of the polymer in the conductive filler-containing adhesive layer. A conductive filler content within this range is preferable for providing the multilayer adhesive of the invention with an adequate electrical conductivity.

Also, in the inventive multilayer adhesive, the above-described silane coupling agent is included in the ionic liquid-containing adhesive layer.

When the silane coupling agent is included in the inventive composition, the silane coupling agent content is preferably between 0.1 and 10 parts by weight, and more preferably between 1 and 5 parts by weight, per 100 parts by weight of the polymer in the silane coupling agent-containing adhesive layer. A silane coupling agent content within this range is preferable for providing the inventive multilayer adhesive with acceptable adhesiveness.

As noted above, the multilayer adhesive of the invention is an adhesive which is composed of two or more adhesive layers that have electrical conductivity and contain the above-described polymer, and which includes the above-described ionic liquid in at least one of the adhesive layers.

As used herein, to "have electrical conductivity" refers to the ability to pass electricity. Specifically, the volume resistivity is preferably $10^{10}$ $\Omega$·cm or below, and more preferably $10^{8}$ $\Omega$·cm or below.

A multilayer adhesive composed of three adhesive layers is described below in conjunction with FIG. 1 as a preferred embodiment of the inventive multilayer adhesive.

FIG. 1 is a schematic cross-sectional view showing a preferred embodiment of the multilayer adhesive of the invention. As shown in FIG. 1, a multilayer adhesive 3 used for bonding a first adherend 1 with a second adherend 2 is

composed of adhesive layers 31, 32 and 33.
In the multilayer adhesive of the invention, adhesive layers 31 to 33 each have electrical conductivity and contain the above-described polymer.
Moreover, in the multilayer adhesive of the invention, the ionic liquid may be included in any one of adhesive layers 31 to 33, although it is preferably included either in adhesive layer 32 alone or in both adhesive layers 31 and 33.
Here, the inventive method of detachment which uses the inventive multilayer adhesive is a peeling method in which one member bonded using the multilayer adhesive is separated from another member after electricity has been passed through the adhesive.
The method for passing electricity through the adhesive is exemplified by a method in which an electrical current is applied using the adhesive layer 31 as the positive electrode and adhesive layer 33 as the negative electrode. If the adherends 1 and 2 are objects which conduct electricity, a method in which electricity is passed through the respective adherends as the electrodes may be used.
When electricity is passed through the multilayer adhesive by such a method, the ionic liquid present in one of the adhesive layers 31 to 33 presumably electrolyzes, with anions such as $BF_4^-$ migrating toward the anode and cations such as pyridinium ions migrating toward the cathode. In this way, it is assumed that oxidation arises on the anode side and reduction arises on the cathode side, weakening the bond strength at the interface between the first adherend 1 and the first adhesive layer 31 or the interface between the first adhesive layer 31 and the second adhesive layer 32, and weakening the bond strength at the interface between the second adherend 2 and the third adhesive layer 33 or the interface between the third adhesive layer 33 and the second adhesive layer 32, thereby making it possible to separate the adherends 1 and 2 at these interfaces.
In the inventive multilayer adhesive, the thickness of the adhesive layers is not subject to any particular limitation. However, to ensure a sufficient bond strength, a thickness of about 1 to about 10 mm is preferred, and a thickness of about 1 to about 2 mm is more preferred. To illustrate, in the embodiment shown in FIG. 1, if the second adhesive layer 32 has a thickness of from about 1 to about 10 mm, to play the role of primers applied to the surfaces of adherends 1 and 2, respectively, the adhesive layers 31 and 32 may each have a thickness of from about 0.1 to about 0.5 mm.
The direct glazing material of the invention is a sealant which makes used of the above-described inventive adhesive, and which directly bonds together the body and window glass of an automobile.
The direct glazing material of the invention, because it makes use of the inventive multilayer adhesive which is composed of two or more adhesive layers having electrical conductivity and containing a polymer, even when used to bond together adherends that do not conduct electricity, such as glass or an electrodeposition coated sheet, has a sufficient bond strength when attached and enables the adherends to be easily separated following use.

## Examples

Next, the electropeeling composition of the invention is illustrated more fully by way of examples, which are not intended to limit the scope of the invention.

### Urethane Prepolymer 1

300 g of polypropylene glycol (EXC2020; number-average molecular weight, 2,000; Asahi Glass Co., Ltd.), 700 g of polypropylene triol (EXC5030; number-average molecular weight, 5,000; Asahi Glass Co., Ltd.) and 542 g of plasticizer (DINA; New Japan Chemical Co., Ltd.) were mixed together, then dehydrated under reduced pressure at 110°C for 8 hours.
Next, diphenylmethane-4,4'-diisocyanate (Cosmonate PH; produced by Mitsui Takeda Chemicals, Inc.) was added to this mixture in an amount such as to set the index expressed as NCO groups/OH groups (number of isocyanate groups per hydroxyl group) to 1.7, and stirring was carried out in a stream of nitrogen at 80°C for 24 hours, thereby synthesizing Urethane Prepolymer 1 (NCO% = 1.23%).

### Epoxy Resin 1

A bisphenol A-type epoxy resin (Epikote 828, produced by Japan Epoxy Resin) was used as Epoxy Resin 1.

### Examples 1 to 5, Comparative Examples 1 and 2

The respective ingredients shown in Table 1 below were formulated in the proportions (parts by weight) shown in Table 1 per 100 parts by weight of Urethane Prepolymer 1 or Epoxy Resin 1, then uniformly dispersed in a high-viscosity mixer, thereby giving a resin composition.
Each of the resin compositions obtained was evaluated as described below to determine the adhesiveness and the

detachability following the application of an electrical current. The results are shown in Table 1 below.

Adhesiveness

The respective resin compositions thus obtained were used to bond together two steel sheets (each 100×25×1.6 mm). Specifically, as shown in FIG. 2 (showing a test specimen furnished for the adhesion test), the resin composition was applied to a portion (20x25 mm) of the steel sheets in such a way as to result in an adhesive layer thickness of 1 mm, and the sheets were bonded together.
Following adhesion, the composition was allowed to cure at room temperature for one week. Those specimens in which the sheets could not subsequently be separated by hand were rated as "Good" for adhesiveness.

Detachability

After measuring the bond strength, the positive electrode of a DC power supply was attached to one of the steel sheets, the negative electrode was attached to the other steel sheet, and a current was applied under the conditions shown below in Table 1 below.
The degree of adhesion thereafter was checked. When the two steel sheets could be easily separated by hand, the detachability was rated as "Good." When they could not be separated by hand, the detachability was rated as "NG."
Table 1

| | CE 1 | EX 1 | EX 2 | CE 2 | EX 3 | EX 4 | EX 5 |
|---|---|---|---|---|---|---|---|
| Urethane Prepolymer 1 | 100 | 100 | 100 | 100 | 100 | 100 | |
| Epoxy Resin 1 | | | | | | | 100 |
| Isocyanate silane | | | | 3 | 3 | 3 | |
| Polyamide amine | | | | | | | 98 |
| Carbon black | 100 | 100 | 100 | 100 | 100 | 100 | |
| Ionic Liquid 1 | | 20 | | | | | 20 |
| Ionic Liquid 2 | | | | | 20 | | |
| Ionic Liquid 3 | | | 20 | | | 20 | |
| Adhesiveness | Good | Good | Good | Good | Good | Good | Good |
| Detachability | | | | | | | |
| Voltage (V) | 20 | 20 | 20 | 20 | 20 | 20 | 20 |
| Current (A) | 0.050 | 0.025 | 0.040 | 0.010 | 0.010 | 0.020 | 0.01 |
| Current application time (min) | 2 | 2 | 2 | 2 | 2 | 2 | 2 |
| Valuation | NG | Good | Good | NG | Good | Good | Good |

The various ingredients indicated in above Table 1 other than Urethane Prepolymer 1 and Epoxy Resin 1 are described below.

- Ionic Liquid 1: IL-A2 (Koei Chemical Co., Ltd.)
- Ionic Liquid 2: IL-C3 (Koei Chemical Co., Ltd.)
- Ionic Liquid 3: IL-P14 (Koei Chemical Co., Ltd.)
- Isocyanatosilane: Y-5187 (Nippon Unicar Co., Ltd.)
- Polyamide amine: Sanmide 301D (Sanwa Chemical Industry Co., Ltd.)
- Carbon black: Asahi Thermal (Asahi Carbon Co., Ltd.)

As is apparent from Table 1, the compositions obtained in Examples 1 to 5 of the invention had an excellent adhesiveness after curing, in addition to which the bond strength weakened following the application of an electrical current, allowing the sheets to be easily separated by hand. By contrast, in Comparative Examples 1 and 2, the bond strength following the application of an electrical current did not weaken, as a result of which the sheets could not be separated by hand.
Next, the electropeeling multilayer adhesive of the invention is illustrated more fully by way of examples, which are not intended to limit the scope of the invention.

Compositions of Adhesive Layers A to I

The respective ingredients shown in Table 2 were mixed in the indicated weight ratios, then uniformly dispersed in a high-viscosity mixer to form adhesive layer compositions.
The glass transition temperatures and electrical conductivities of each of the prepared compositions were measured by the methods described below. The results are shown in Table 2.

Glass Transition Temperature

Measurement was carried out using a dynamic mechanical analyzer for determining viscoelastic properties (DMA, manufactured by TA Instruments) at a frequency of 10 Hz, a strain of 0.01%, and a temperature ramp-up rate of 5°C/min.

Electrical Conductivity

The electrical conductivity was rated as "Good" when the volume resistivity was $10^{10}$ Ω·cm or below, and "NG" when the volume resistivity was greater than $10^{10}$ Ω·cm.
Two flat electrodes were pressed, at an interval therebetween of 6 cm, against the surface of a cured film of the respective prepared compositions, the resistance (Ω) between the electrodes was measured, and the following formula was used to determine the volume resistivity (Ω·cm).

$$\text{Volume resistivity} = \text{resistance} \times \text{thickness of adhesive layer (cm)} \times \text{electrode width (cm)} \div 6$$

Table 2

| Adhesive layer | A | B | C | D | E | F | G | H | I | J |
|---|---|---|---|---|---|---|---|---|---|---|
| Urethane Prepolymer 1 | 100 | 100 | 100 | 100 | | | | | 100 | 100 |
| Modified Silicone Resin 1 | | | | | 100 | 100 | | | | |
| Epoxy Resin 2 | | | | | | | 100 | 100 | | |
| Epoxy Resin Curing agent 1 | | | | | | | 98 | 98 | | |
| Conductive Filler 1 | 100 | 100 | 100 | 100 | 100 | 100 | 20 | 20 | | |
| Filler 1 | | | | | | | | | 100 | 100 |
| Silane Coupling Agent 1 | 3 | 3 | 3 | | | | | | 3 | 3 |
| Silane Coupling Agent 2 | | | | | | | 3 | 3 | | |
| Catalyst | | | | | 2 | 2 | | | | |
| Ionic Liquid 3 | 10 | 20 | | | 10 | | 10 | | | 10 |
| Glass transition temp. (°C) | <0 | <0 | <0 | <0 | <0 | <10 | 45 | 45 | <0 | <0 |
| Conductivity | Good | Good | Good | Good | Good | Good | Good | Good | NG | NG |

The respective ingredients shown in Table 2 are described below.

- Urethane Prepolymer 1: A urethane prepolymer of the same type as that synthesized above in Example 1

- Modified Silicone Resin 1: MS polymer (MS203; produced by Kaneka Corporation)
- Epoxy Resin 2: A bisphenol A-type epoxy resin (EP-4100E; produced by Asahi Denka Kogyo K.K.)
- Epoxy Resin Curing agent 1: Polyamide amine (Sanmide 301D; produced by Sanka Chemical Industry, Ltd.)
- Conductive Filler 1: Carbon black (Asahi Thermal; produced by Asahi Carbon Co., Ltd.)
- Filler 1: Calcium carbonate (Super S; produced by Maruo Calcium Co., Ltd.)
- Silane Coupling Agent 1: Isocyanatosilane (Y-5187; produced by Nippon Unicar Co., Ltd.)
- Silane Coupling Agent 2: Epoxysilane (A-187; produced by Nippon Unicar Co., Ltd.)
- Catalyst: Octyl phthalate solution of dibutyltin oxide
- Ionic Liquid 3: IL-P14; produced by Koei Chemical Co., Ltd.)

Examples 6 to 18, Comparative Examples 3 to 6

The adherends were bonded together with multilayer adhesives obtained using the respective compositions prepared above.
Specifically, in order to form the multilayer adhesive shown in FIG. 1, the first adhesive layer 31 and the third adhesive layer 33 shown in Table 3 below were each formed to an adhesive layer thickness of 2 mm on, respectively, a first adherend 1 and a second adherend 2, then cured at room temperature for 5 days. Next, the second adhesive layer 32 shown in Table 3 below was pressed therebetween to a thickness of 2 mm, and cured at room temperature for 5 days. The reference numbers mentioned here together with the various components denote the symbols shown in FIG. 1.
As shown in Table 3 below, an electrodeposition-coated sheet or a glass sheet was used as the first adherend 1, and an electrodeposition-coated sheet or a steel sheet was used as the second adherend 2.
The adhesiveness and the detachability following the application of an electrical current for each of the cured products obtained were evaluated as described below. Those results are shown in Table 3.

Adhesiveness

For each of the cured products obtained, those specimens in which the adherends 1 and 2 could not separated by hand were rated as "Good" for adhesion.

Detachability

Following measurement of the bond strength, the positive electrode of a DC power supply was attached to the first adhesive layer and the negative electrode was attached to the third adhesive layer, and a current was applied under the conditions shown in Table 3 below.
The adhesiveness thereafter was checked. When the adherends 1 and 2 could be easily separated by hand, the detachability was rated as "Good." When they could not be separated by hand, the detachability was rated as "NG." In Table 3, the ratio "A1/L1" appearing in the "Area of separation" row indicates that separation was carried out between the first adherend 1 and the first adhesive layer, the ratio "A1/L2" appearing in the "Area of separation" row indicates that separation was carried out between the first adherend 1 and the second adhesive layer, and "--" indicates that, because separation by hand was not possible, there was no area of separation.
Table 3 (part 1)

| | Examples of the Invention | | | | | | | |
|---|---|---|---|---|---|---|---|---|
| | 6 | 7 | 8 | 9 | 10 | 11 | 12 | 13 |
| First adhesive layer (anode)<br>Second adhesive layer<br>Third adhesive layer (cathode)<br>Adherend 1<br>Adherend 2 | A<br>D<br>A<br>EDCS<br>EDCS | A<br>D<br>A<br>glass<br>EDCS | A<br>D<br>B<br>EDCS<br>EDCS | B<br>D<br>B<br>EDCS<br>EDCS | C<br>A<br>C<br>EDCS<br>EDCS | A<br>D<br>C<br>EDCS<br>SS | C<br>E<br>C<br>EDCS<br>EDCS | A<br>F<br>A<br>EDCS<br>EDCS |
| Adhesiveness | Good | Good | Good | Good | Good | Good | Good | Good |
| Detachability<br>Voltage (V) | 100 | 100 | 100 | 100 | 100 | 100 | 100 | 100 |

(continued)

| | | | | | | | | |
|---|---|---|---|---|---|---|---|---|
| Detachability<br>Current (A)<br>Current application time (min)<br>Valuation<br>Area of separation | <br>0.05<br>3<br>Good<br>A1/L1 | <br>0.05<br>3<br>Good<br>A1/L1 | <br>0.10<br>3<br>Good<br>A1/L1 | <br>0.10<br>3<br>Good<br>A1/L1 | <br>0.05<br>3<br>Good<br>A1/L2 | <br>0.05<br>3<br>Good<br>A1/L1 | <br>0.05<br>3<br>Good<br>A1/L2 | <br>0.05<br>3<br>Good<br>A1/L1 |
| EDCS = electrodeposition-coated sheet; SS = steel sheet | | | | | | | | |

Table 3 (part 2)

| | Examples of the Invention | | | | | Comparative Examples | | | |
|---|---|---|---|---|---|---|---|---|---|
| | 14 | 15 | 16 | 17 | 18 | 3 | 4 | 5 | 6 |
| First adhesive layer (anode)<br>Second adhesive layer<br>Third adhesive layer (cathode)<br>Adherend 1<br>Adherend 2 | E<br>D<br>E<br>EDCS<br>EDCS | A<br>H<br>A<br>EDCS<br>EDCS | C<br>G<br>C<br>EDCS<br>EDCS | G<br>C<br>G<br>EDCS<br>EDCS | H<br>A<br>H<br>EDCS<br>EDCS | C<br>J<br>C<br>EDCS<br>EDCS | I<br>A<br>I<br>EDCS<br>EDCS | C<br>D<br>C<br>EDCS<br>EDCS | C<br>H<br>C<br>EDCS<br>EDCS |
| Adhesiveness | Good | Good | Good | Good | Good | Good | Good | Good | Good |
| Detachability<br>Voltage (V)<br>Current (A)<br>Current application time (min)<br>Valuation<br>Area of separation | <br>100<br>0.05<br>3<br>Good<br>A1/L1 | <br>100<br>0.02<br>5<br>Good<br>A1/L1 | <br>100<br>0.02<br>5<br>Good<br>A1/L2 | <br>100<br>0.02<br>5<br>Good<br>A1/L1 | <br>100<br>0.02<br>3<br>Good<br>A1/L1 | <br>100<br>0.00<br>3<br>NG<br>-- | <br>100<br>0.00<br>3<br>NG<br>-- | <br>100<br>0.02<br>3<br>NG<br>-- | <br>100<br>0.01<br>3<br>NG<br>-- |
| EDCS = electrodeposition-coated sheet; SS = steel sheet | | | | | | | | | |

As is apparent from Table 3 above, the cured products obtained in Examples 6 to 18 of the invention had good adhesive properties, in addition to which, even when the adherends themselves are not electrically conductive, the bond strength weakened after an electrical current was applied to the adhesive layers weakened, enabling the adherends to be easily separated by hand. By contrast, in Comparative Examples 3 and 4, because an electrical current does not pass through the adhesive layers, the adherends could not be separated by hand. In Comparative Examples 5 and 6, the bond strength after an electric current was applied did not weaken, as a result of which the adherends could not be separated by hand.

Examples 19 and 20

In each of these examples, two steel sheets (SS-400; dimensions: 100×25×1 mm) were bonded together using the resin composition obtained in Example 2. Specifically, as shown in FIG. 3 (showing a test specimen furnished for the adhesion test), the resin composition obtained was applied to a portion (10x25 mm) of the steel sheets in such a way as to result in an adhesive layer thickness of 5 mm, and the sheets were bonded together. In Example 20, a urethane epoxy primer (242R; produced by The Yokohama Rubber Co., Ltd.) was applied prior to application of the resin composition.

Adhesiveness

Following adhesion, the composition was allowed to cured at room temperature for one week, following which those specimens in which the sheets could not be separated by hand were rated as "Good" for adhesiveness.

Tensile Shear Bond Strength

After the bond strength had been measured, the positive electrode of the DC power supply was attached to one of the steel sheets, the negative electrode was attached to the other steel sheet, and the tensile shear bond strength before and after the application of an electric current were measured under the conditions shown in Table 4 below.
The tensile shear bond strength was measured in accordance with JIS K6850 (1999). That is, a test specimen for which the bond strength had been measured was mounted in a fixture of the tensile testing machine, spacers were positioned therebetween so as cause the load to act parallel to the bonding plane, and measurement was carried out at a pull rate of 50 mm/min and room temperature.

Table 4

| | Examples of the invention | |
|---|---|---|
| | 19 | 20 |
| Primer | no | yes |
| Adhesiveness | Good | Good |
| Tensile shear bond strength | | |
| Before current application (MPa) | 0.31 | 4.50 |
| Voltage (V) | 100 | 100 |
| Current (A) | 0.05 | 0.02 |
| Current application time (min) | 1 | 1 |
| After current application (MPa) | 0.19 | 0.37 |

As is apparent from Table 4 above, the composition obtained in Example 2 of the invention had an excellent adhesiveness and tensile shear bond strength after curing, in addition to which the tensile shear bond strength weakened markedly following the application of an electrical current. In an embodiment in which a primer was not used (Example 19), the tensile shear bond strength before current application was 0.31 MPa, which was acceptable for an embodiment in which a primer is not used.
With regard to the tensile shear bond strength, similar tests were carried out also on compositions in which only the amount of ionic liquid added was varied (1 part by weight versus 5 parts by weight), whereupon the tensile shear bond strength was found to decrease at a higher amount of ionic liquid addition, thus shortening the detachment time (see FIG. 4).

## Claims

1. An electropeeling composition comprising an ionic liquid.

2. The electropeeling composition according to claim 1, wherein said ionic liquid content is between 0.1 and 30 wt%.

3. The electropeeling composition according to claim 1 or 2, wherein said ionic liquid contains at least one type of anion selected from the group consisting of $Br^-$, $AlCl_4^-$, $Al_2Cl_7^-$, $NO_3^-$, $BF_4^-$, $PF_6^-$, $CH_3COO^-$, $CF_3COO^-$, $CF_3SO_3^-$, $(CF_3SO_2)_2N^-$, $(CF_3SO_2)_3C^-$, $AsF_6^-$, $SbF_6^-$, $F(HF)_n^-$, $CF_3CF_2CF_2CF_2SO_3^-$, $(CF_3CF_2SO_2)_2N^-$ and $CF_3CF_2CF_2COO^-$.

4. The electropeeling composition according to any one of claims 1 to 3, wherein said ionic liquid contains cations of formula (1) or (2) below

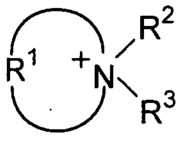

(1)

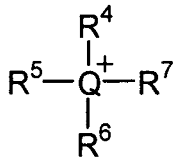

(2)

where, in formula (1), $R^1$ is a hydrocarbon group of 1 to 20 carbons which may include a nitrogen atom, and $R^2$ and $R^3$ are each independently a hydrogen atom or an alkyl group of 1 to 20 carbons which may include a heteroatom, with the proviso that there is no $R^3$ moiety if the nitrogen atom contains a double bond; and in formula (2), Q is a nitrogen, phosphorus, sulfur or carbon atom, and $R^4$, $R^5$, $R^6$ and $R^7$ are each independently a hydrogen atom or an alkyl group of 1 to 8 carbons which may include a heteroatom, with the proviso that there is no $R^7$ moiety if Q is a sulfur atom.

**5.** The electropeeling composition according to any one of claims 1 to 4, wherein said ionic liquid has a melting point of 100°C or below.

**6.** The electropeeling composition according to any one of claims 1 to 5, wherein said composition further comprises a polymer.

**7.** The electropeeling composition according to claim 6, wherein said polymer has a glass transition point of 60°C or below.

**8.** The electropeeling composition according to claim 6 or 7, wherein said polymer is a urethane prepolymer.

**9.** The electropeeling composition according to claim 6, wherein said polymer is an epoxy resin.

**10.** The electropeeling composition according to any one of claims 6 to 9, wherein said composition further comprises between 1 and 200 parts by weight of an electrically conductive filler per 100 parts by weight of the polymer.

**11.** An adhesive comprising said electropeeling composition of any one of claims 1 to 10.

**12.** The adhesive according to claim 11, wherein said adhesive is moisture-curing.

**13.** An electropeeling multilayer adhesive comprising said electropeeling composition of any one of claims 1 to 10, wherein said adhesive comprises two or more adhesive layers which are electrically conductive and contain the polymer, at least one of which layers includes the ionic liquid.

**14.** The electropeeling multilayer adhesive according to claim 13, wherein the content of said ionic liquid is between 1 and 50 parts by weight per 100 parts by weight of the polymer in the ionic liquid-containing adhesive layer.

**15.** The electropeeling multilayer adhesive according to claim 13 or 14, wherein said adhesive is moisture-curing.

**16.** A coating agent comprising said electropeeling composition of any one of claims 1 to 10.

**17.** The coating agent of claim 16, wherein said coating comprises a covering material for coating onto a substrate.

**18.** A direct glazing material comprising said adhesive of claim 11 or 12.

**19.** A direct glazing material comprising said electropeeling multilayer adhesive of any one of claims 13 to 15.

**20.** A method of detachment which comprises the steps of passing electricity through the adhesive on one member bonded using the adhesive of claim 11 or 12, and detaching the member from another member.

**21.** A method of detachment which comprises the steps of passing electricity through the adhesive on one member

bonded using the electropeeling multilayer adhesive of any one of claims 13 to 15, and detaching the member from another member.

**22.** A method of detachment which comprises the steps of, applying the coating agent of claim 16 onto a substrate, applying a covering material over the coating agent, passing electricity through the coating agent, and detaching the covering material from the substrate.

**23.** A method of detachment which comprises the steps of applying a covering material onto a substrate using the coating agent of claim 17, passing electricity through the coating agent, and detaching the covering material from the substrate.

FIG.1

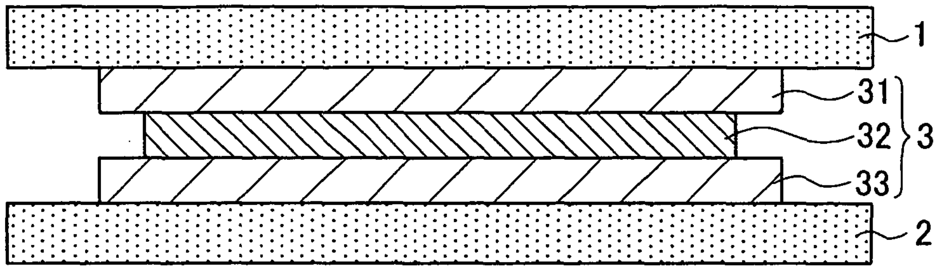


FIG.2

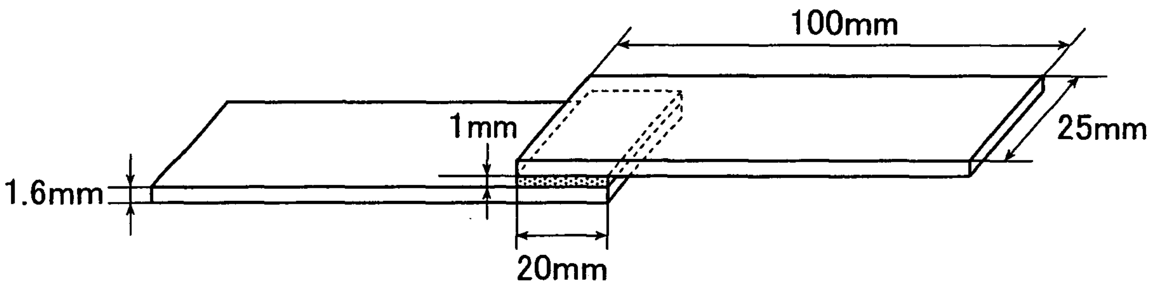


FIG.3

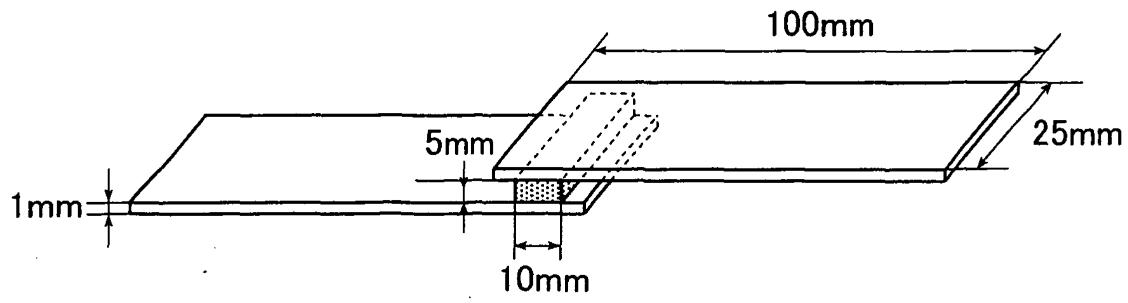

FIG.4

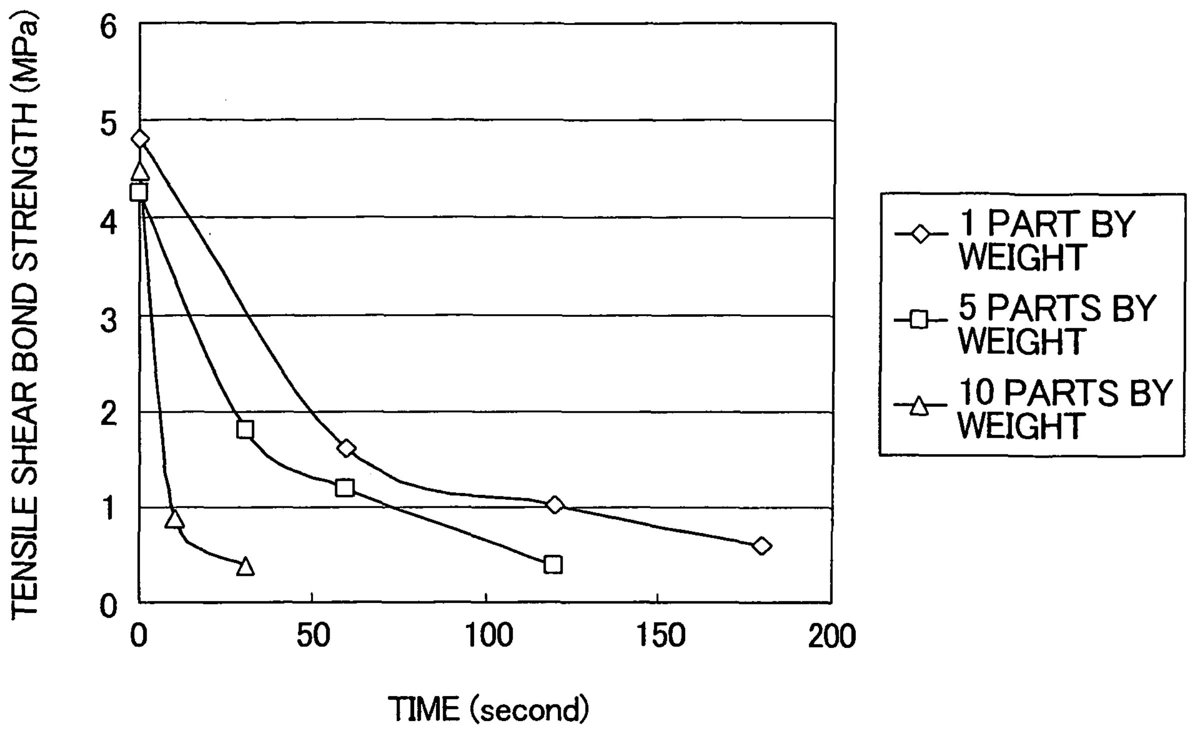
TENSILE SHEAR BOND STRENGTH (MPa)
6
5
4
3
2
1
0
0
50
100
150
200
TIME (second)
1 PART BY WEIGHT
5 PARTS BY WEIGHT
10 PARTS BY WEIGHT

**INTERNATIONAL SEARCH REPORT**

International application No.
PCT/JP2006/315752

A. CLASSIFICATION OF SUBJECT MATTER
*C09J201/00*(2006.01)i, *B05D5/00*(2006.01)i, *C08L63/00*(2006.01)i, *C08L75/04*(2006.01)i, *C09D7/12*(2006.01)i, *C09D163/00*(2006.01)i, *C09D175/04*(2006.01)i, *C09J163/00*(2006.01)i, *C09J175/04*(2006.01)i

According to International Patent Classification (IPC) or to both national classification and IPC

B. FIELDS SEARCHED

Minimum documentation searched (classification system followed by classification symbols)
C09J201/00, B05D5/00, C08L63/00, C08L75/04, C09D7/12, C09D163/00, C09D175/04, C09J163/00, C09J175/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2004-517185 A (Creavis Gesellschaft fuer Technologie Und Innovation MBH), 10 June, 2004 (10.06.04), Claims 1 to 15; Par. No. [0039]<br>& WO 02/53636 A1 & AT 288938 A<br>& CA 2433788 A & CN 1492902 A<br>& DE 10100455 A1 & US 2004/54041 A1<br>& EP 1353992 A1 | 1-7,11, 13-14,16-19<br>8-23 |
| X<br><br>Y | JP 2004-536940 A (3M Innovative Properties Co.), 09 December, 2004 (09.12.04), Claims 1 to 23; Par. Nos. [0016], [0026] to [0041], [0084]<br>& WO 03/11958 A1 & AT 286936 A<br>& CN 1561364 A & EP 1414896 A1<br>& US 2003/114560 A1 | 1-7,11, 13-14,16-19<br>8-23 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 October, 2006 (31.10.06) | 07 November, 2006 (07.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/315752

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-319599 A (Sekisui Chemical Co., Ltd.), 21 November, 2000 (21.11.00), Claims 1 to 4 (Family: none) | 8-23 |
| Y | JP 2003-504504 A (EIC Laboratories, Inc.), 04 February, 2003 (04.02.03), Claims 1 to 59 & JP 2003-129030 A & US 2001-31367 A1 & WO 01/5584 A1 & CA 2341417 A | 8-23 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003129030 A
- JP 4536319 B
- JP 46012154 B
- JP 49032673 B
- JP 50156599 A
- JP 51073561 A
- JP 54006096 A
- JP 55082123 A
- JP 55123620 A
- JP 55125121 A
- JP 55131022 A
- JP 55135135 A
- JP 55137129 A
- JP 3072527 A